# EUROPEAN PATENT APPLICATION

(11) **EP 0 591 636 A2**
(43) Date of publication of application: **13.04.1994**
(21) Application number: 93111759.2
(22) Date of filing: 22.07.1993
(51) Int. Cl.: G11B 11/10, G11B 13/04, G11B 27/034, G06F 15/40

(54) **Partial ROM magneto-optical disk medium and computer system**

(30) Priority: 07.10.1992 JP 268638/92
(71) Applicant: FUJITSU LIMITED, Kawasaki-shi, Kanagawa 211 (JP)
(72) Inventor: Shimura, Takaki, c/o FUJITSU LIMITED, Kawasaki-shi, Kanagawa 211 (JP); Ogawa, Seiya, c/o FUJITSU LIMITED, Kawasaki-shi, Kanagawa 211 (JP); Ogawa, Koichi, c/o FUJITSU LIMITED, Kawasaki-shi, Kanagawa 211 (JP); Utsumi, Kenichi, c/o FUJITSU LIMITED, Kawasaki-shi, Kanagawa 211 (JP); Nakahara, Masaru, c/o FUJITSU LIMITED, Kawasaki-shi, Kanagawa 211 (JP)
(74) Representative: Seeger, Wolfgang, Dipl.-Phys.

(57) **Abstract**

A ROM region provided by recording fixed information such as a book into a disk with pits by stamping and a RAM region formed by coating the disk with a magnetic film constitute a partial ROM magneto-optical disk medium. Additional information such as an underline and a note with respect to the fixed information is stored in the RAM region. A computer body reads the fixed information from the partial ROM magneto-optical disk medium by the operation of an operating portion, displays the information on a display unit, creates underline information and/or note information and a note mark, and displays such information on the display unit and, if necessary, stores it into the RAM region of the partial ROM magneto-optical disk medium.

## Description

### BACKGROUND OF THE INVENTION

### Field of the Invention

The present invention relates to a partial ROM magneto-optical disk medium provided with a ROM region exclusively for reading and a rewritable RAM region, and a computer system using such a partial ROM magneto-optical disk medium or an optical disk as an information recording medium. More particularly, the present invention relates to a partial ROM magneto-optical disk medium which is capable of creating, recording and displaying additional information such as an underline and a note to a book such as a dictionary and a reference book, and a computer system using such a partial ROM magneto-optical disk medium or an optical disk as an information recording medium.

With the recent wide spread of personal computers and word processors to offices and homes, electronization of books (book information) such as dictionaries, manuals, reference books and dictionaries of technical terms, which are conventionally produced from printed pages, has been enabled.

Since information is digitally recorded in electronized books, reproduction of completely the same book is easy. In addition, elimination and modification of a part of the contents are easier in an electronized book than that on printed pages. However, since a book is copyrighted, it is necessary to regulate the free modification of an electronized book by a user and to make the book difficult to copy in order to reserve the right of the writer.

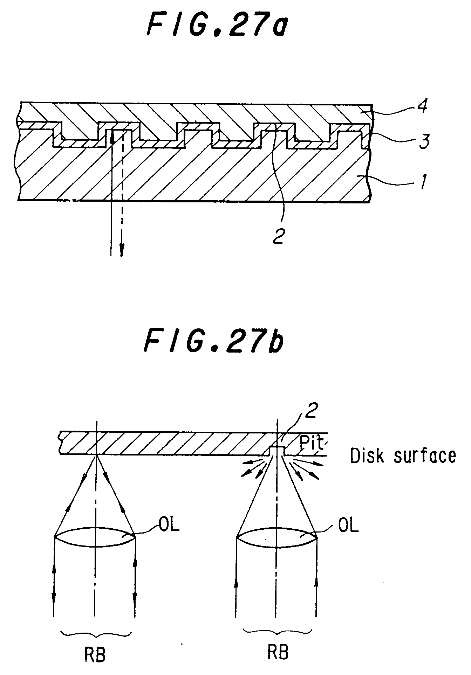

For this reason, more and more CD-ROMs have come to be used as a recording medium in order to provide electrified books (electrified publications). A CD-ROM is composed of a transparent plastic layer 1, pits (indentation) 2 formed on the plastic layer 1 so as to record information, a metal (e.g., aluminum) film 3 formed by vacuum evaporation or the like on the surface with pits formed therein, and a protective layer 4 provided on the metal film 3, as shown in Fig. 27(a). When the signal layer (pits and metal film) is irradiated with a laser beam RB through an objective OL, as shown in Fig. 27(b), approximately the whole rays are reflected as they are at a portion where there is no pit. On the other hand, where there is a pit, the rays are diffracted so that the returned rays are outside of the field of view of the objective OL and only a part of the light returns to the objective. It is therefore possible to read information by detecting the returned light by photo diode.

In this manner, since information is recorded in a CD-ROM by forming pits, information is unlikely to be lost in comparison with magnetically recorded information. In addition, it is impossible to replace the information, and it is possible to simultaneously produce a large number of CD-ROMs each of which has recorded a large amount of information by stamping. Thus, a CD-ROM is excellent from the point of view of production and protection of a writer.

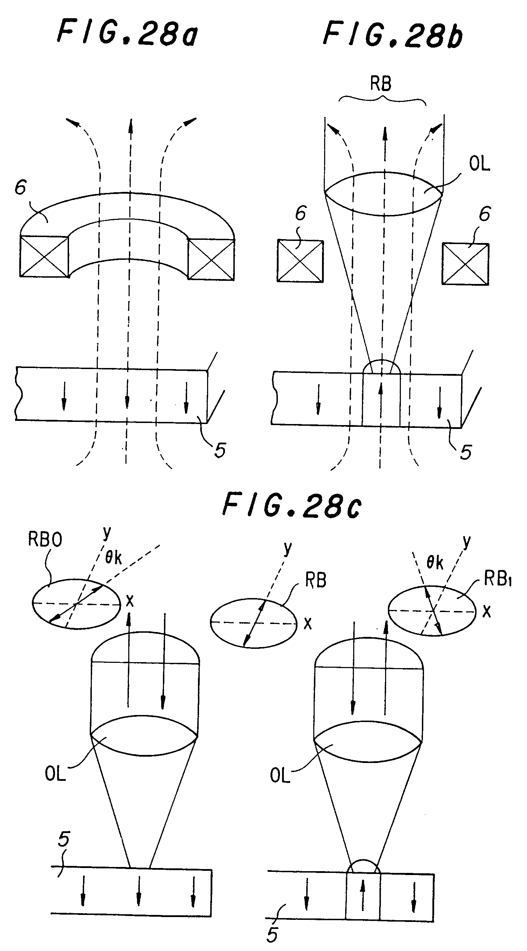

Use of a rewritable magneto-optical disk as a recording medium for an electronized publication is considered. A magneto-optical disk is produced by coating the surface of a disk with a magnetic film such as a MnBi thin film and it utilizes the nature of a magnetic film that the coercive force thereof necessary for magnetization inversion reduces in correspondence with the rise in the temperature (the coercive force is 0 at the Curie point). In other words, after irradiating the disk medium with a laser beam in order to raise the temperature of the disk medium to about 200°C so as to reduce the coercive force, a weak magnetic field is applied to the disk medium, thereby controlling the direction of magnetization so as to record or delete information. Accordingly, if an upward magnetic field is applied to a magnetic film 5 by a writing coil 6 when the direction of magnetization of the magnetic film 5 is down, as shown in Fig. 28(a), and the portion of the magnetic film 5 at which the direction of magnetization is to be inverted is irradiated with the laser beam RB through the objective OL, as shown in Fig. 28(b), the direction of magnetization at the portion is inverted to up, thereby enabling the recording of information. At the time of reading information, if the magnetic film 5 is irradiated with the laser beam RB having a polarization plane in the direction of the y-axis, as shown in Fig. 28(c), reflected beam RB0 with the polarization surface rotated clockwise by ϑₖ due to the magnetic Kerr effect is obtained at the portion in which the direction of magnetization is down, while reflected beam RB1 with the polarization surface rotated counterclockwise by ϑₖ due to the magnetic Kerr effect is obtained at the portion in which the direction of magnetization is up. It is therefore possible to read the direction of magnetization and, hence, information by detecting the polarized state of the reflected beam.

Since such a magneto-optical disk is rewritable, it is possible to record book information in a predetermined area of the magneto-optical disk, to assign the area as a write inhibiting area and to write additional information and up-version information in another region.

In the case of using a CD-ROM as a recording medium for an electronized publication, it is impossible to add desired information to the information recorded in the CD-ROM.

Although additional recording of information is possible when a magneto-optical disk is used as a recording medium for an electrified publication, since it is necessary to electrically write each book into the magneto-optical disk, production of the electrified publication takes much time and leads to a rise in the cost.

When a reader uses a book such as a dictionary, a manual, a reference book and a dictionary of technical terms, the reader often underlines a passage, writes a note on words in a space or writes a method of introducing a formula in the book in order to deepen his understanding. If it is possible for the user of an electronized publication to freely write information such as an underline and a note created by the user so as to make the electronized publication more convenient in the same way as in a book, and to display the information simultaneously with the contents of the publication, the user can read and consult the electronized publication as if it were a book composed of printed pages, whereby the convenience of the electronized publication is enhanced.

In a conventional electronized publication, however, it is impossible to insert modifying information such as an underline and additional information such as a note into a passage and to display the information simultaneously with the passage. Although Japanese Patent Publication No. 60735/1987 (published on Dec. 17, 1987 under the title of RECORDING CARRIER, applicant: N. Phillips Gloeulampen Fabliken) discloses a magneto-optical disk medium provided with a ROM region exclusively for reading and a rewritable RAM region, no technique is disclosed of inserting an underline into a passage or writing additional information such as a note and displaying the information simultaneously with the book.

### SUMMARY OF THE INVENTION

Accordingly, it is an object of the present invention to eliminate the above-described problems in the related art and to provide a partial ROM magneto-optical disk medium which enables a user to freely write additional information (private information) such as an underline and a note and need not write electrically fixed information such as a book.

It is another object of the present invention to provide a partial ROM magneto-optical disk medium which facilitates the production of fixed information such as a book in a short time and a low cost by recording the fixed information by stamping.

It is still another object of the present invention to provide a computer system which enables a user of an electronized publication to freely write private information such as an underline and a note so as to be displayed.

It is a further object of the present invention to provide a computer system which enables a user of a partial ROM magneto-optical disk medium provided with a ROM region for storing book information and a rewritable RAM region to freely write private information such as an underline and a note into the RAM region and which enables the private information to be displayed simultaneously with the book information.

To achieve this aim, in a first aspect of the present invention, there is provided a partial ROM magneto-optical disk medium comprising a ROM region into which fixed information is recorded by stamping, and a RAM region for storing at least additional information such as an underline and a note with respect to the fixed information. The fixed information is a book such as a dictionary, a manual, a reference book and a dictionary of technical terms. The additional information includes modifying information such as an underline and has data which indicates the position of the fixed information at which the fixed information is modified. The additional information further includes note information such as a note and has note mark information for specifying the word or the phrase in the fixed information to which the note is added.

In a second aspect of the present invention, there is provided a computer system comprising: a computer body; a display unit; a partial ROM magneto-optical disk apparatus using as a storage medium a partial ROM magneto-optical disk medium provided with a ROM region for storing fixed information and a readable/rewritable RAM region for storing additional information such as an underline and a note with respect to the fixed information; an operating portion which is operated so as to create additional information such as an underline and a note and to display the additional information; and a control unit for creating the additional information such as an underline and a note on the basis of the operation of the operating portion and displaying the additional information on the display unit.

In a third aspect of the present invention, there is provided a computer system comprising: a computer body; a display unit; an optical disk apparatus using a disk for optically storing fixed information as a storage medium; a rewritable storage unit for storing additional information such as an underline and a note with respect to said fixed information; an operating portion which is operated so as to create and display the additional information such as an underline and a note; and a control unit for creating the additional information such as an underline and a note on the basis of the operation of the operating portion and displaying the additional information on the display unit.

Other features and advantages of the present invention will be apparent from the following description taken in conjunction with the accompanying drawings.

### BRIEF DESCRIPTION OF THE DRAWINGS

Fig. 1 is an explanatory view of the principle of the present invention;
Figs. 2(a) to 2(c) show the structure of an embodiment of a partial ROM magneto-optical disk medium according to the present invention, wherein

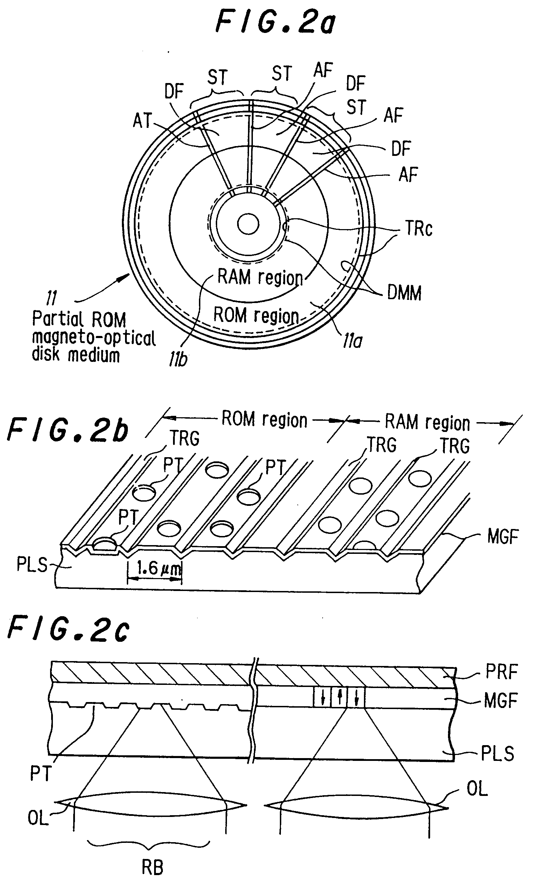

Fig. 2(a) is a schematic plan view of the embodiment;
Fig. 2(b) is a partially enlarged view of a partial ROM magneto-optical disk medium; and
Fig. 2(c) is a partially sectional view thereof;

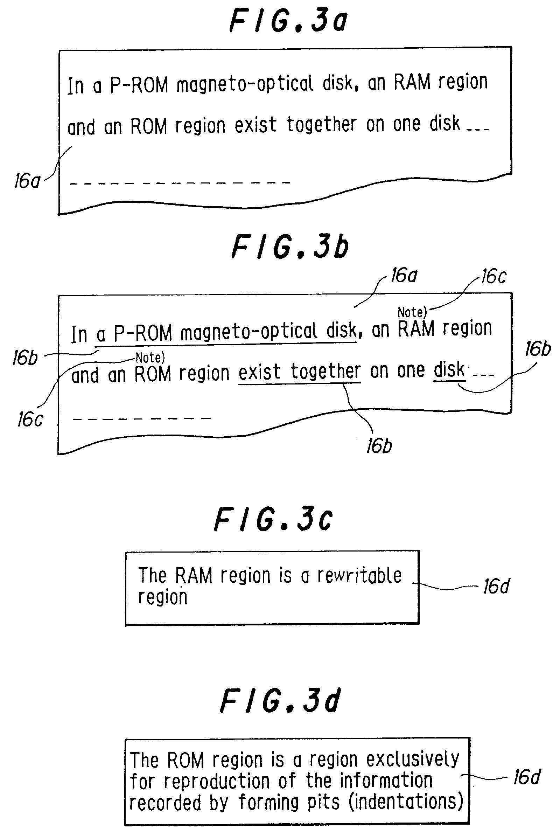

Figs. 3(a) to 3(d) explain various types of information, wherein
Fig. 3(a) explains fixed information;
Fig. 3(b) explains underlines and notes; and
Figs. 3(c) and 3(d) explain note information;

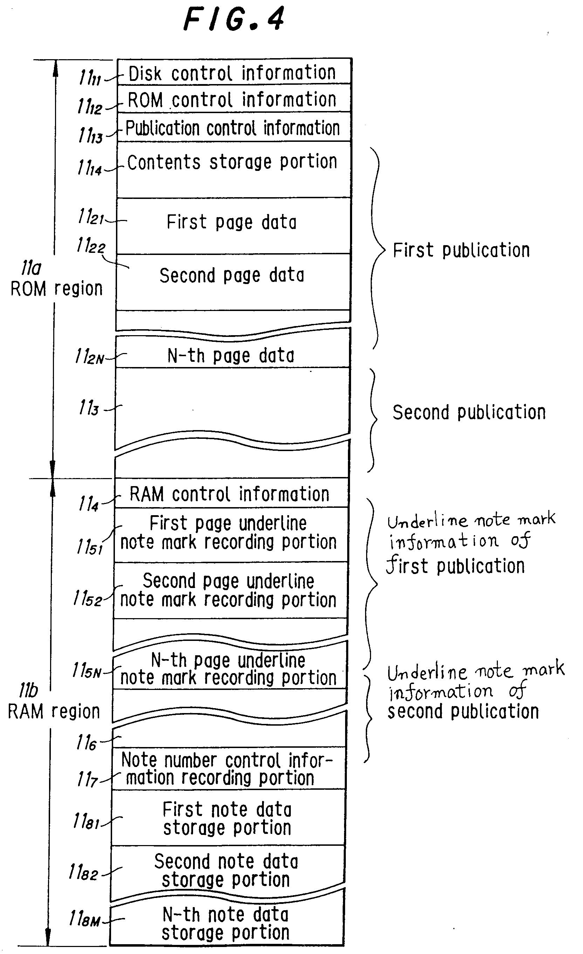

Fig. 4 is a detailed explanatory view of the information being recorded in a partial ROM magneto-optical disk;

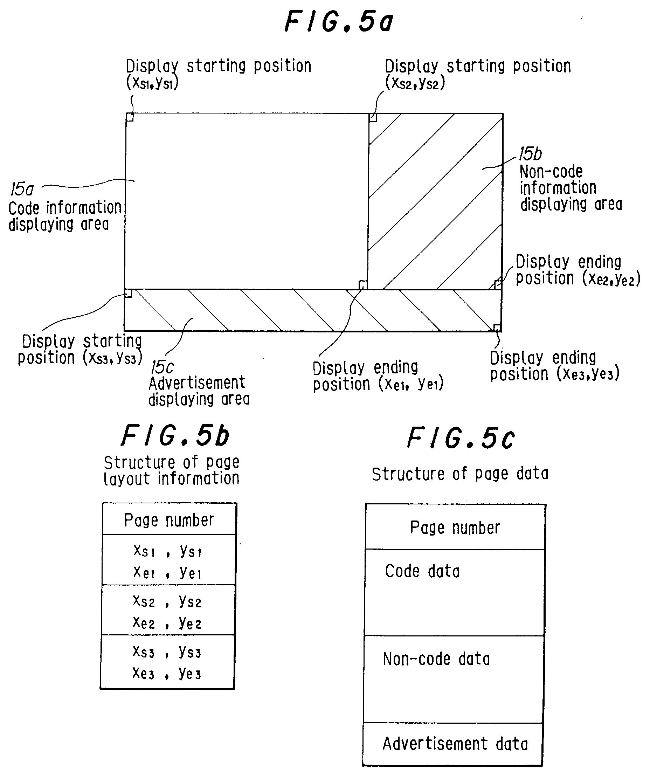

Figs. 5(a) to 5(c) are explanatory views of page layout·page data, wherein
Fig. 5(a) is an explanatory view of a page layout;
Fig. 5(b) shows the structure of page layout information; and
Fig. 5(c) shows the structure of page data;

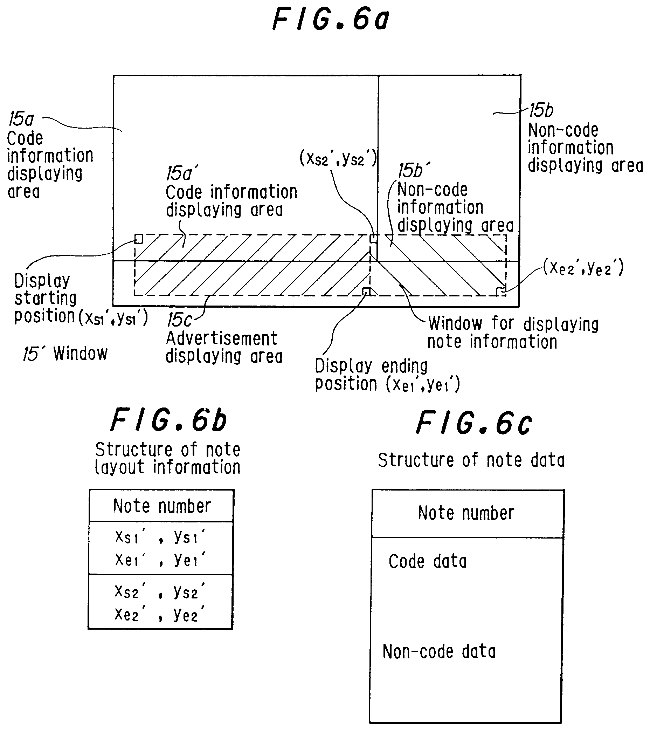

Figs. 6(a) to 6(c) are explanatory views of note layout· note data, wherein
Fig. 6(a) is an explanatory view of a note data layout;
Fig. 6(b) shows the structure of note layout information; and
Fig. 6(c) shows the structure of note data;

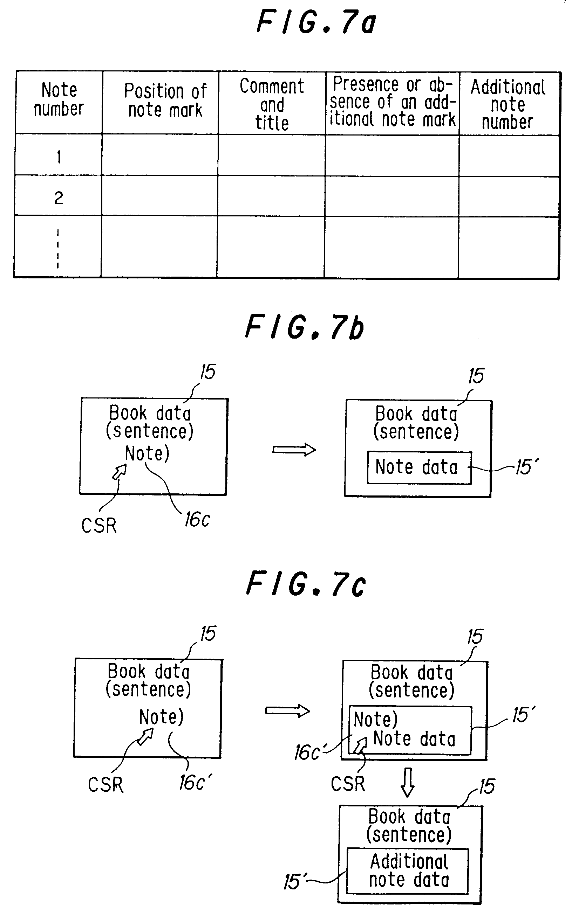

Figs. 7(a) to 7(c) are explanatory views of note number control information, wherein
Fig. 7(a) is an explanatory view of the format of the note number control information;
Fig. 7(b) is an explanatory view of the operation for displaying note data; and
Fig. 7(c) is an explanatory view of the operation for displaying additional note information;

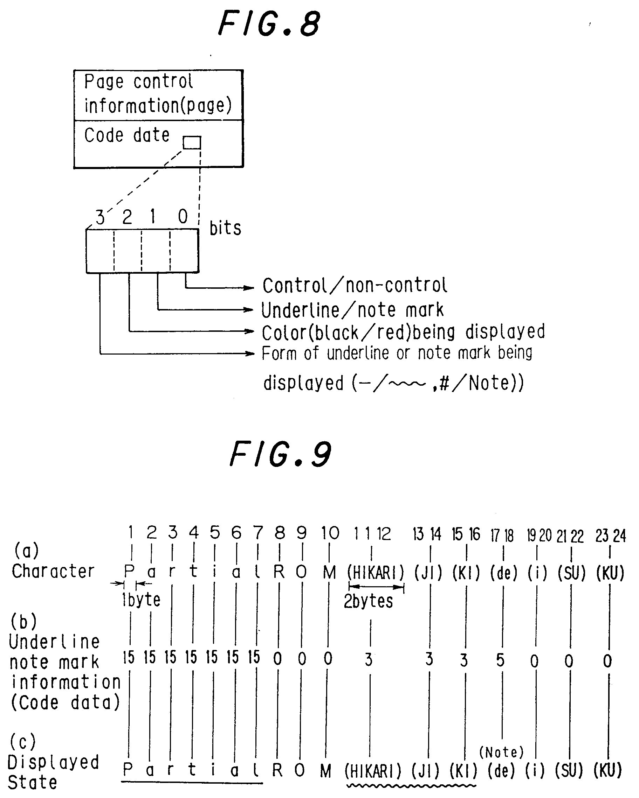

Fig. 8 is an explanatory view of the format of underline·note mark information;
Fig. 9 shows an example of underline·note mark information;

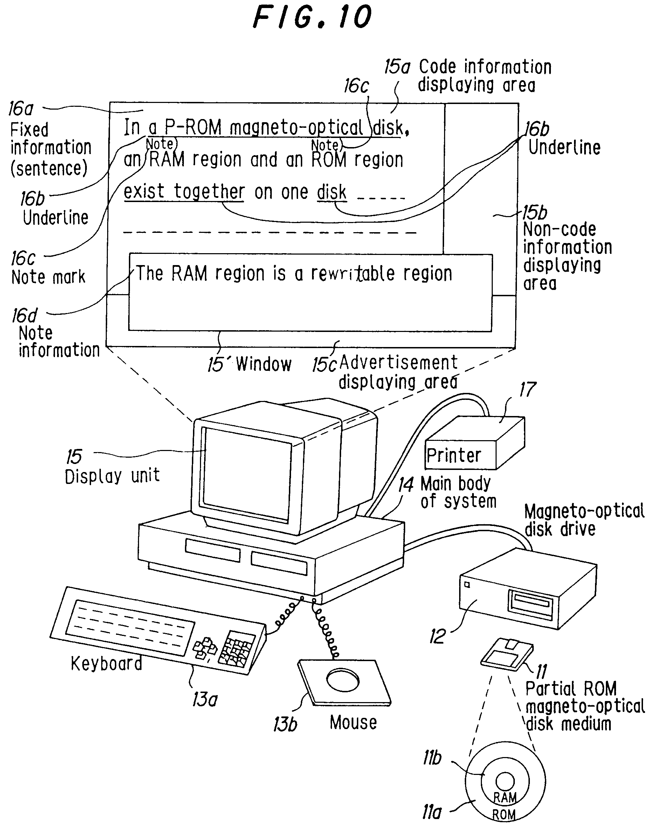

Fig. 10 shows the whole structure of an embodiment of a computer system according to the present invention;

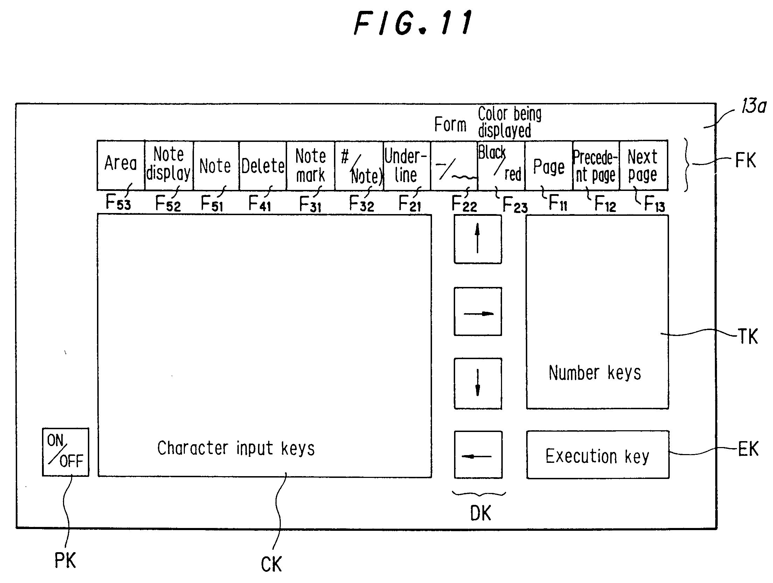

Fig. 11 shows the structure of a keyboard in the embodiment shown in Fig. 10;

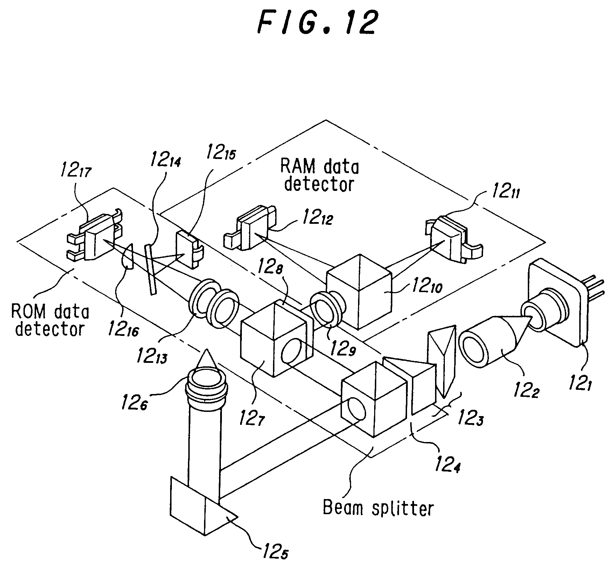

Fig. 12 shows the fundamental structure of a magneto-optical head;

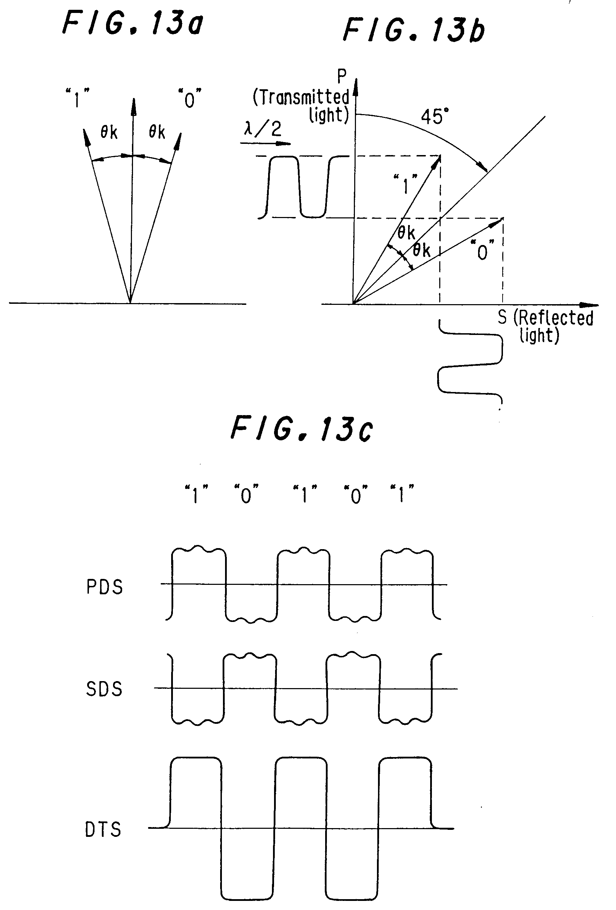

Figs. 13(a) to 13(c) are explanatory views of the principle of reading of RAM information, wherein
Fig. 13(a) is an explanatory view of the rotation of a polarization plane due to the magnetic Kerr effect;
Fig. 13(b) shows the P-wave component output from a polarized beam splitter; and
Fig. 13(c) is an explanatory view of information read signals;

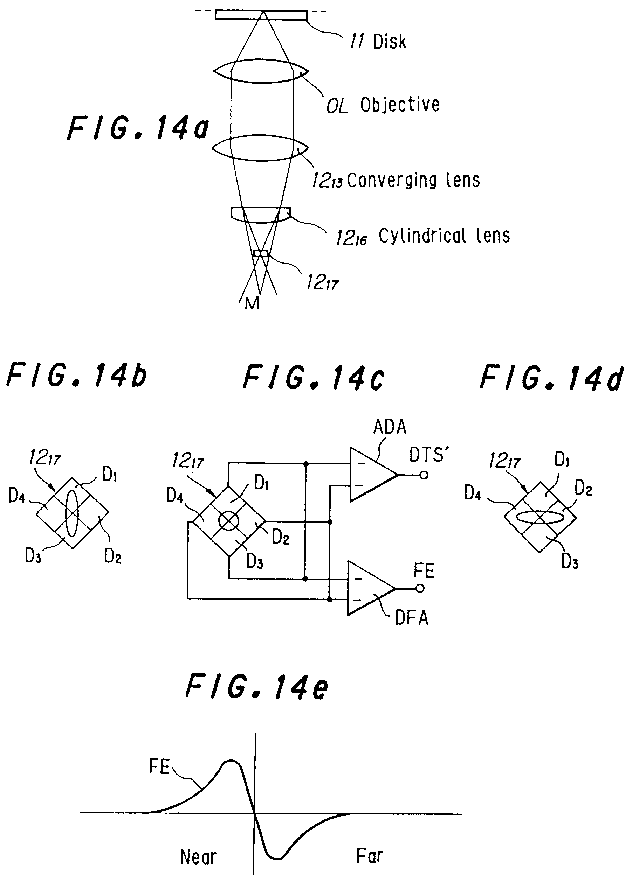

Figs. 14(a) to 14(e) explain the detection of a focus error signal, wherein
Fig. 14(a) is an explanatory view of the structure of a focus servo optical system;
Figs. 14(b) to 14(d) explain a change in the beam section on a light detector in accordance with the distance between the information recording surface and the objective; and
Fig. 14(e) shows the waveform of a focus error signal;

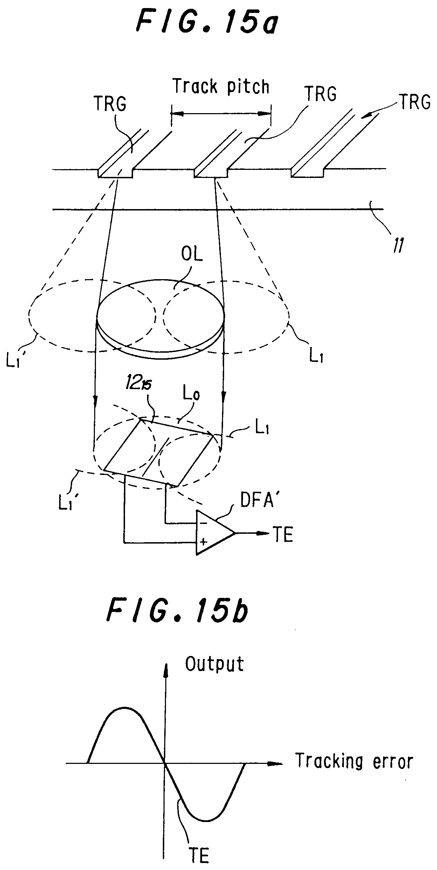

Figs. 15(a) and (b) explain the detection of a tracking error signal, wherein
Fig. 15(a) is an explanatory view of the principle of the detection of a tracking error signal; and
Fig. 15(b) shows the waveform of a tracking error signal;

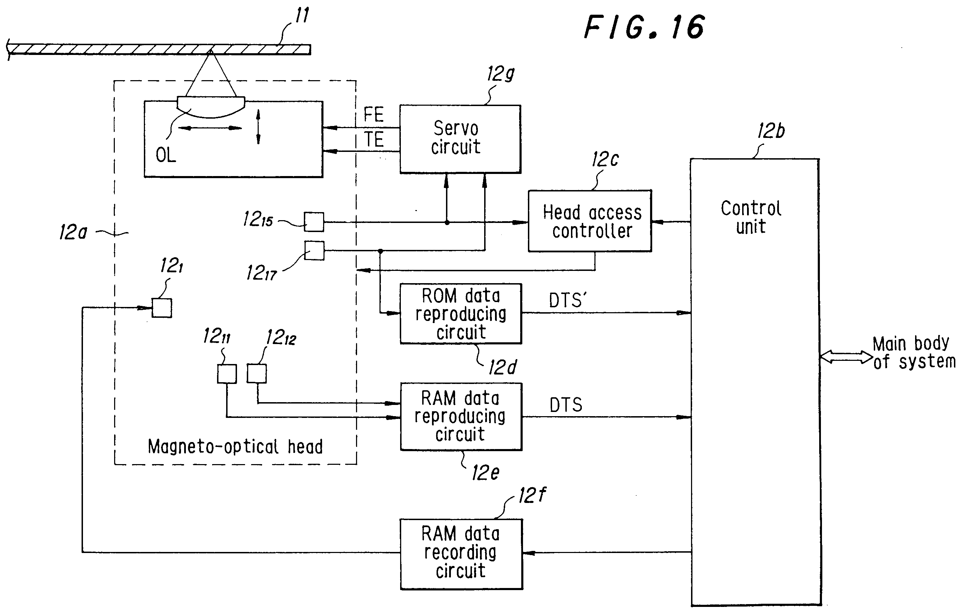

Fig. 16 shows the structure of the magneto-optical disk drive device in the embodiment shown in Fig. 10;

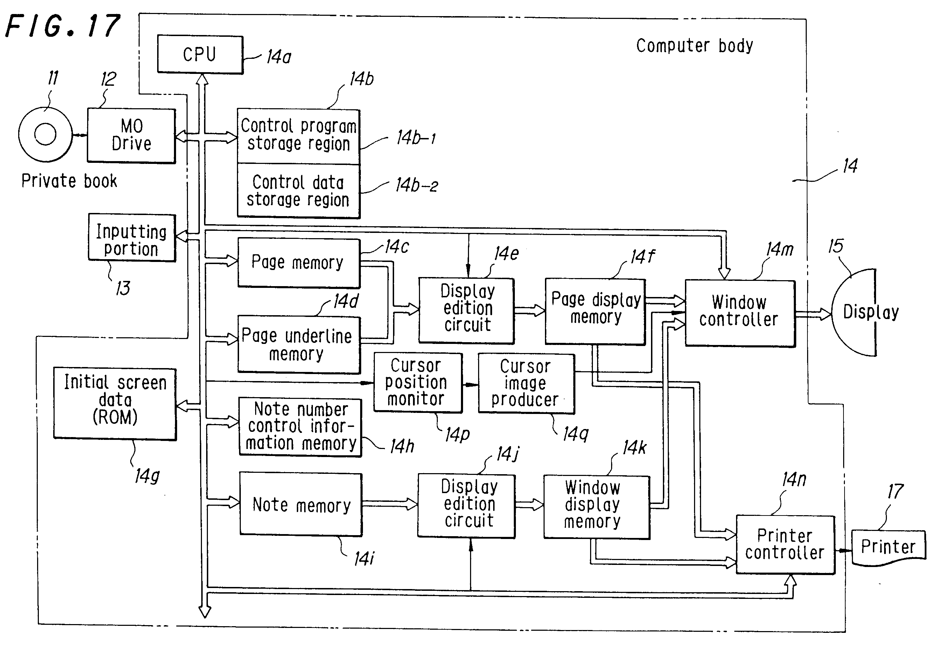

Fig. 17 shows the whole structure of the computer body in the embodiment;

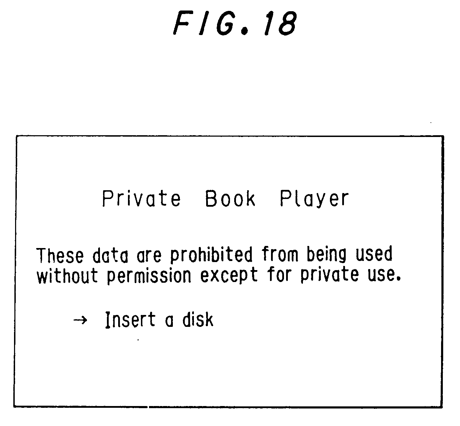

Fig. 18 is an explanatory view of an initial screen;

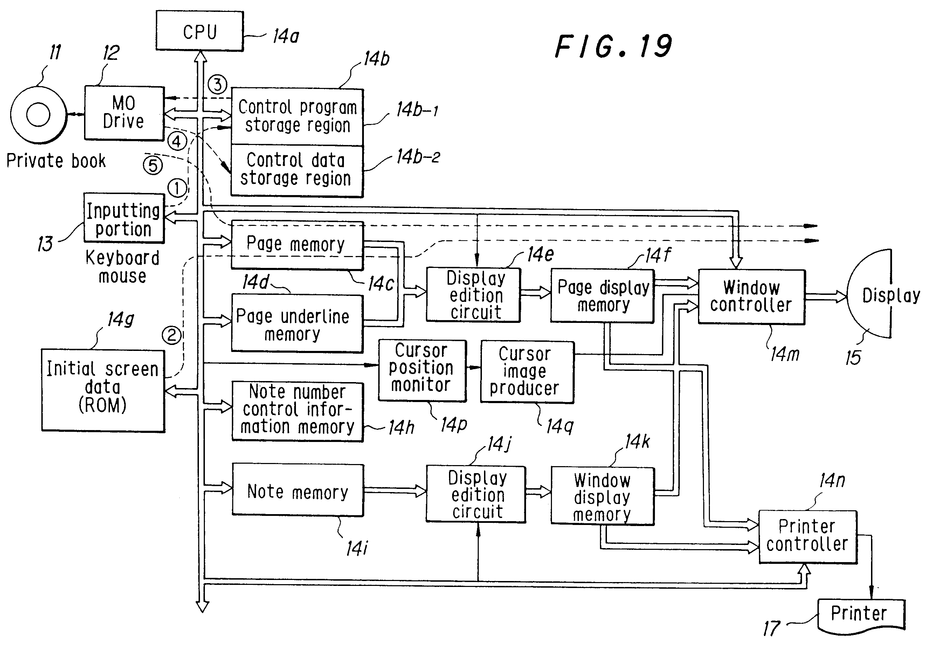

Fig. 19 is an explanatory view of the operation of displaying the initial screen and a publication when the power source is turned on;

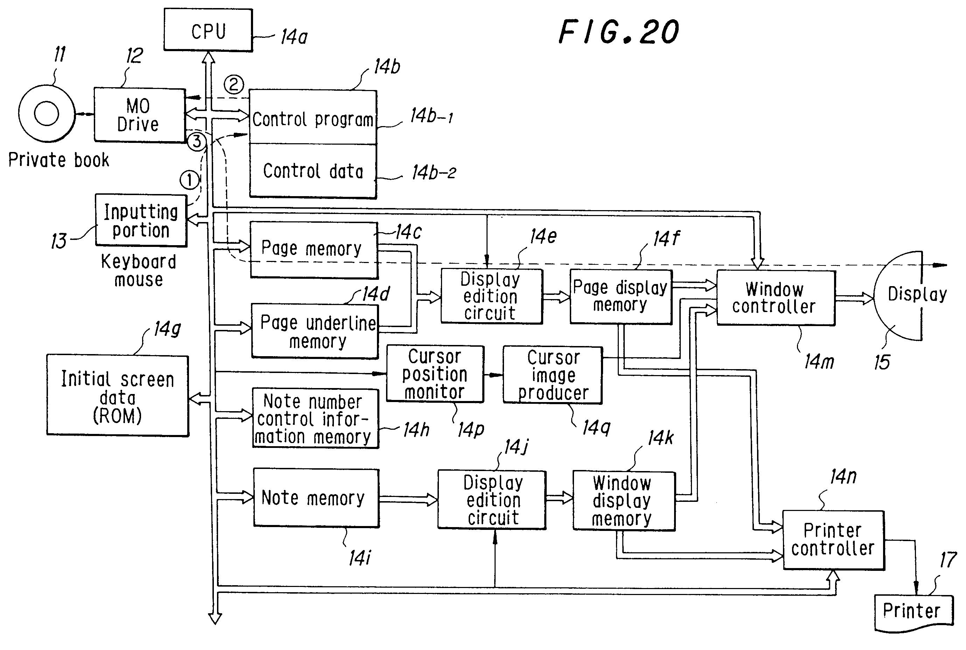

Fig. 20 is an explanatory view of the operation of selecting a publication and displaying the contents;

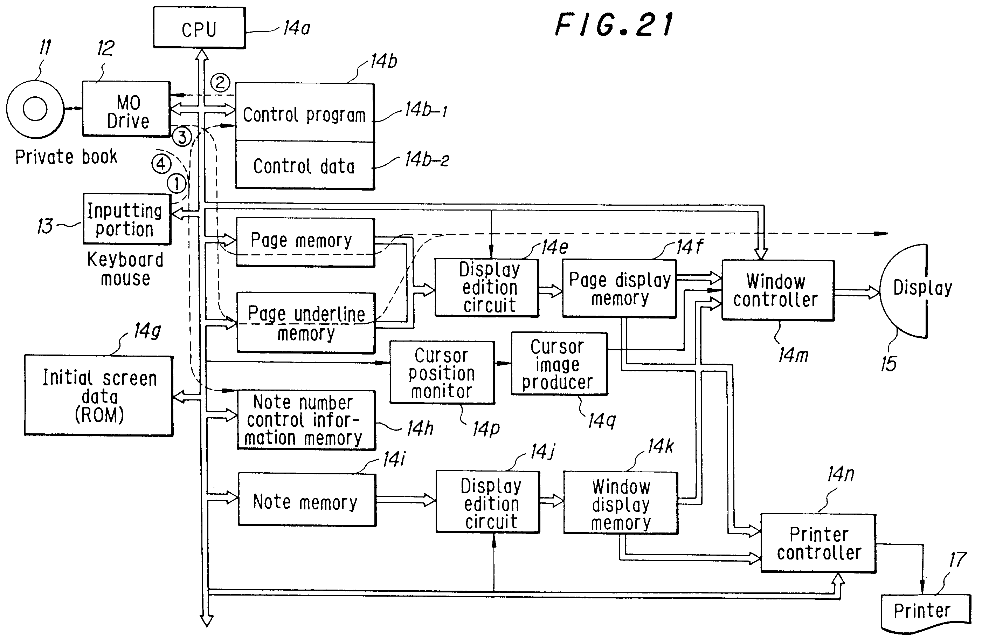

Fig. 21 is an explanatory view of the operation of selecting a page and displaying page information;

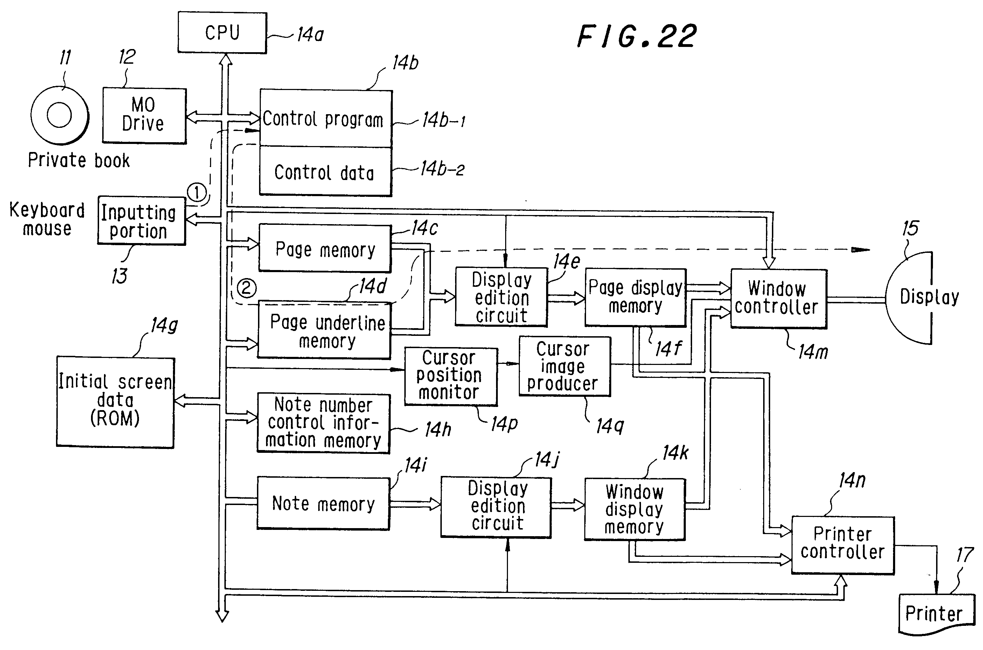

Fig. 22 is an explanatory view of the operation of writing an underline, inserting a note mark and displaying the underline and the note mark;

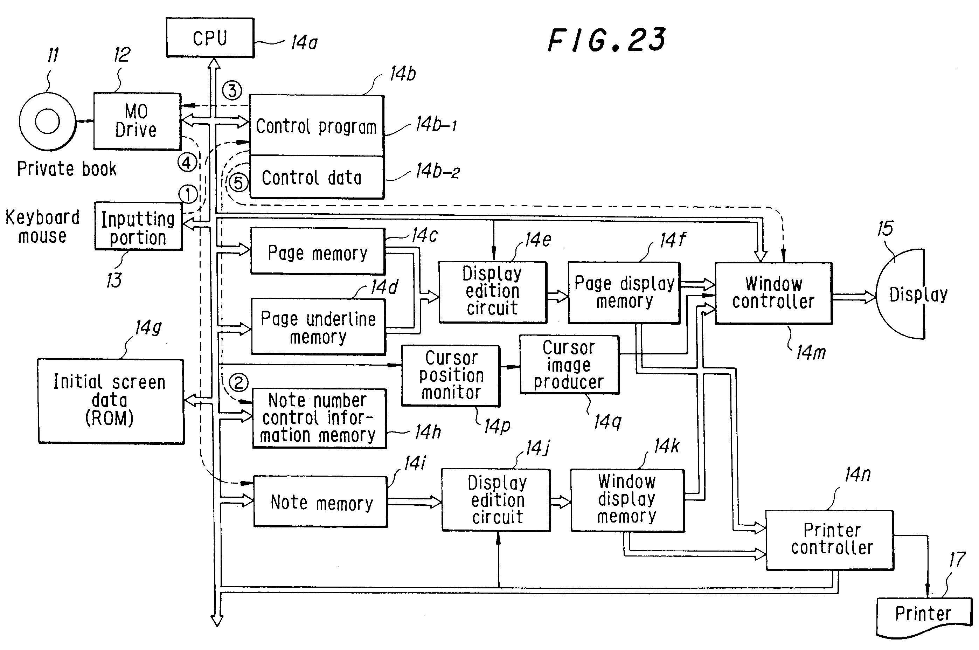

Fig. 23 is an explanatory view of the operation of selecting and displaying a note;

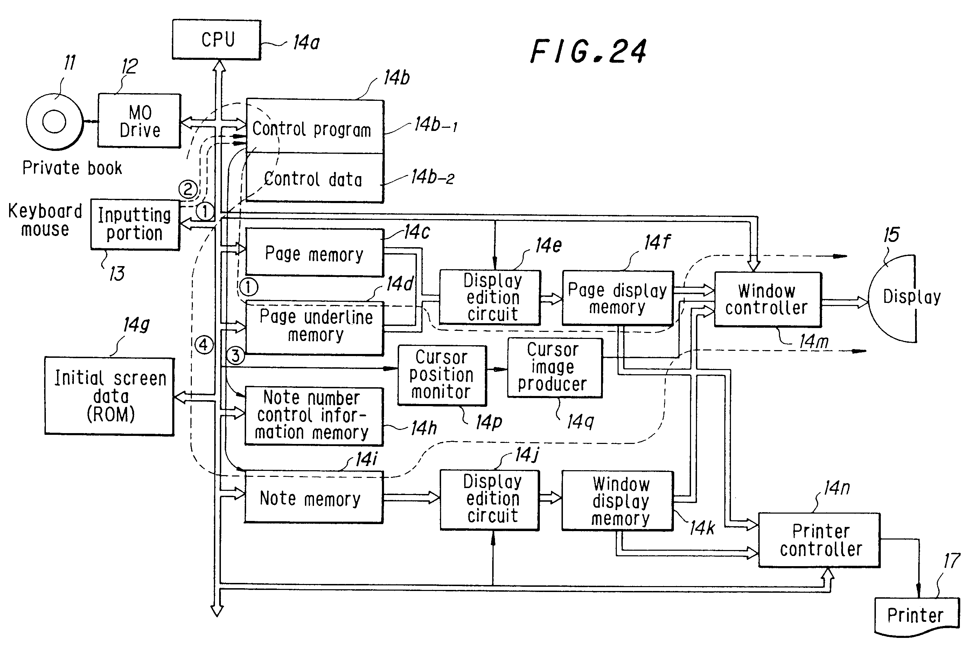

Fig. 24 is an explanatory view of the operation of inputting note information;

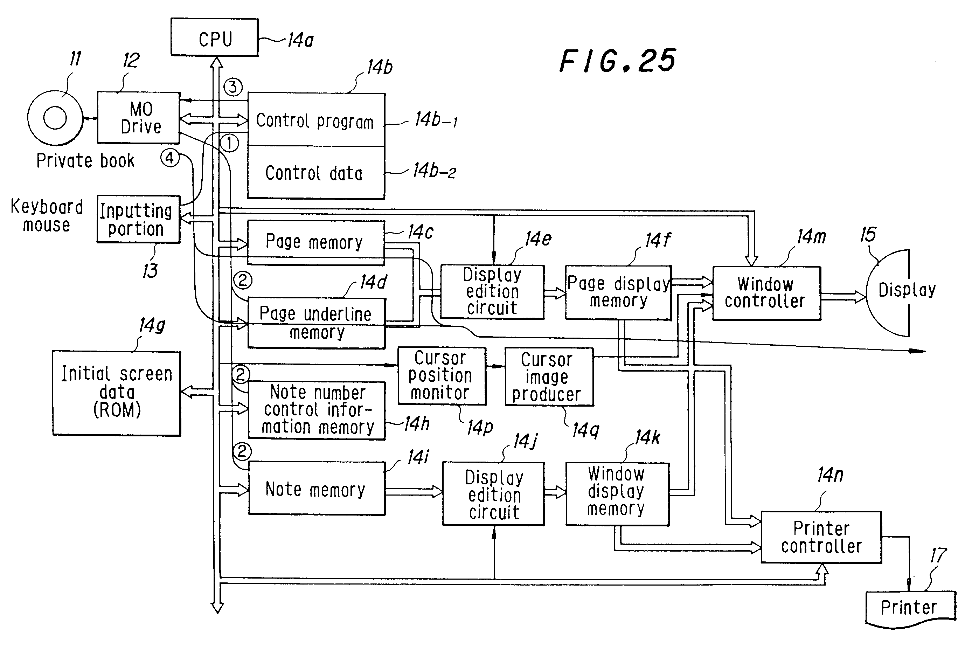

Fig. 25 is an explanatory view of the operation of going to the precedent or next page and writing information into a magneto-optical disk;

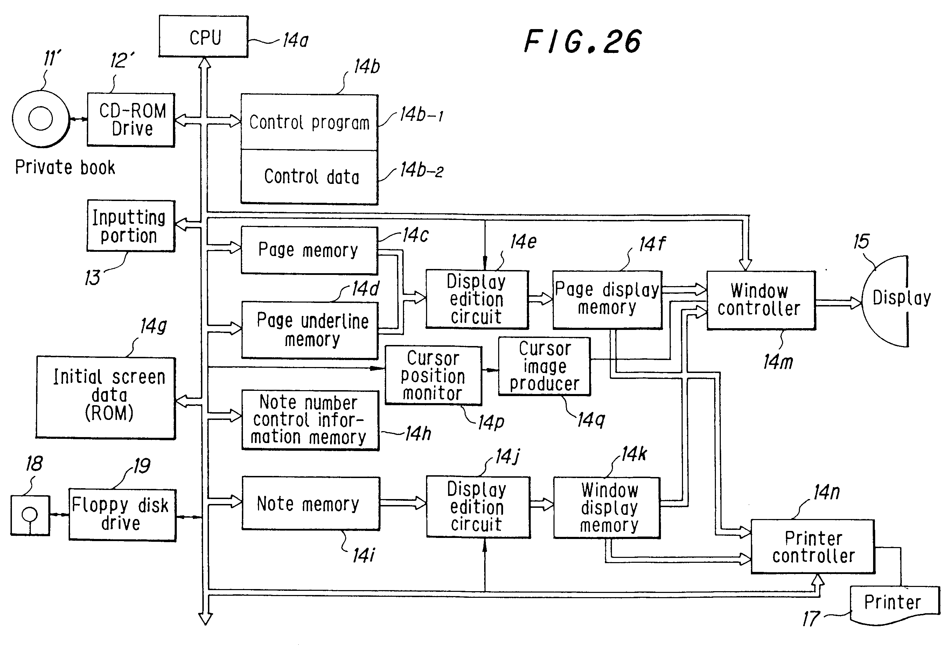

Fig. 26 shows the structure of another embodiment of a computer system according to the present invention;
Figs. 27(a) and 27(b) are explanatory views of a CD-ROM, wherein
Fig. 27(a) is a sectional view thereof; and
Fig. 27(b) is an explanatory view of the principle of the operation of reading information from the CD-ROM; and
Figs. 28(a) to 28(c) are explanatory view of the principle of the operation of writing and reading information into and from a magneto-optical disk.

### DESCRIPTION OF THE PREFERRED EMBODIMENTS

### (a) Schematic explanation of the invention

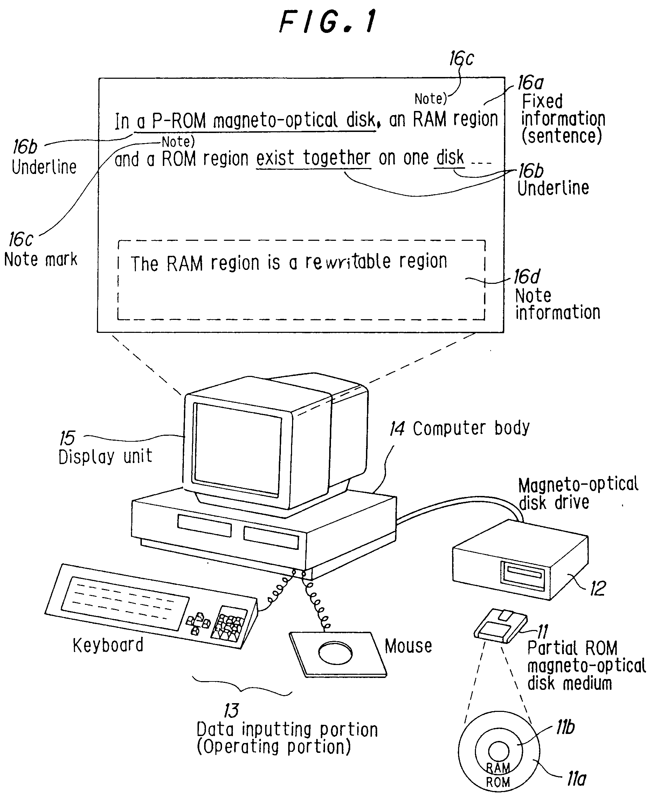

Fig. 1 is an explanatory view of the principle of the present invention. In Fig. 1, the reference numeral 11 represents a partial ROM magneto-optical disk medium provided with a ROM region 11a exclusively for reading and a rewritable RAM region 11b. The reference numeral 12 represents a magneto-optical disk drive, 13 a data inputting portion (operating portion) such as a keyboard and a mouse, 14 the main body of the system (computer body) and 15 a display unit. In the display screen, the reference numeral 16a denotes fixed information such as a book, 16b an underline, 16c a note mark and 16d note information such as a note.

The ROM region 11a provided by recording fixed information such as a book into a disk with pits by stamping and the rewritable RAM region 11b formed by coating at least the remaining portion of the disk with a magnetic film constitute the partial ROM magneto-optical disk medium 11. Additional information (private information) such as an underline and a note with respect to the fixed information is stored in the RAM region 11b. In this way, by collectively recording fixed information by stamping, the process for electrically writing each fixed information is obviated, thereby facilitating the production of an electronized publication and that in a short time and at a low cost. In addition, since it is possible to freely write private information such as the underline 16b, the note mark 16c and the note information 16d with respect to the fixed information 16a, it is possible to control both fixed information and private information by one partial ROM magneto-optical disk medium 11.

Furthermore, it is possible to use the partial ROM magneto-optical disk medium 11 as the recording medium in the computer system so as to read the fixed information 16a from the partial ROM magneto-optical disk medium 11 by the operation of the operating portion 13 of the computer body 14 and display the fixed information 16a on the display unit 15. It is also possible to create the underline 16b, the note mark 16c and the note information 16d with respect to the fixed information 16a, display such information on the display unit 15 and record such information into the RAM region 11b of the partial ROM magneto-optical disk medium 11. In this way, since it is possible for the user to freely write private information such as an underline and note information and display the written information simultaneously with fixed information, the user can utilize the electronized publication as if it were a book composed of printed pages, whereby the convenience of the electronized publication is enhanced.

In addition, it is possible to freely create private information such as an underline and note information and display the private information simultaneously with a book by recording fixed information into a CD-ROM or the like and storing private information into a floppy disk, an IC memory or the like.

### (b) Embodiment of partial ROM magneto-optical disk medium

Figs. 2(a) to 2(c) show the structure of an embodiment of a partial ROM magneto-optical disk medium according to the present invention, wherein Fig. 2(a) is a schematic plan view of the embodiment, Fig. 2(b) is a partially enlarged view of a partial ROM magneto-optical disk medium, and Fig. 2(c) is a partially sectional view thereof.

### Physical format of partial ROM magneto-optical disk medium

The partial ROM magneto-optical disk medium 11 is provided with 10,000 concentric or spiral tracks on both sides, and the whole tracks are separated into 25 fan-shaped sectors. Each sector ST is composed of 512 bytes, and an address field AF is provided at the head portion and a data filed DF is provided at the remaining portion. In the address filed AF, address information is recorded including a sector mark, a track address, a sector address and a preamblie for reproducing a synchornous idle, and data areas stored in the data field DF.

Control tracks TRc are provided on the outermost peripheral portion and the inner most peripheral portion of the storage region of the mp 11, and a defect control region DMM is provided adjacent to each control track TRc. The type of a medium (whether there is a ROM or not), arrangement of the ROM, properties of the medium (reflectivity, recording and reproducing conditions), etc. are stored in the control track TRc, and the arrangement of the replaced sector and a parity sector are stored in the defect control region DMM by magneto-optical recording after the disk medium is inspected.

The partial ROM magneto-optical disk medium 11 is provided with the above-described physical format. The ROM region 11a is provided on the outer side of the partial ROM magneto-optical disk medium 11 while the RAM region 11b is provided on the inner side thereof.

The partial ROM magneto-optical disk medium 11 is composed of a transparent plastic substrate PLS with pits (indentation) PT formed at a part thereof, a magnetic film MGF covering the plastic substrate PLS and a protective film PRF formed on the magnetic film MGF.

The ROM region 11a, the address field AF and the control tracks TRc are formed by stamping, and fixed information, address information and control information are recorded by forming pits on the respective portions. Track guide grooves TRG (see Fig. 2(b)) for tracking servo system are also formed by stamping.

The RAM region 11b and the defect control region DMM are provided by coating the whole surface of the plastic substrate PLS with pits PT formed therein by stamping with the magnetic film MGF. In this case, the magnetic film MGF also covers the ROM region 11a, and the inner peripheral portion other than the ROM region 11a constitutes the RAM region 11b.

Information from the ROM region 11a is read by irradiating the ROM region with a laser beam RB through an objective OL in the same way as in a CD-ROM, and detecting the returned light. Information is written into the RAM region 11b by applying a magnetic field to the RAM region 11b by a writing coil (not shown) and irradiating the portion to which information is to be written with a laser beam RB through the objective OL. Information reading is conducted by utilizing the fact that the polarization plane rotates in the opposite direction to the direction of magnetization due to the magnetic Kerr effect.

### Schematic explanation of information being recorded

Figs. 3(a) to 3(c) are explanatory views of various types of information being recorded in the ROM region 11a and the RAM region 11b in the partial ROM magneto-optical disk medium 11. A book (fixed information) such as a dictionary, a manual, a reference book and a dictionary of technical terms is recorded into the ROM region 11a. For example, the following fixed information 16a:

"In a P-ROM magneto-optical disk, an RAM region and a ROM region exist together on one disk..."
is recorded, as shown in Fig. 3(a). Modifying information such as an underline and note information such as a note mark and a note are recorded in the RAM region 11b.

In Fig. 3(b), the reference numeral 16b represents an underline, 16c a note mark ( note) ) which indicates that there is a note or the like. The underline·note mark information which specifies the position, the shape and the color of the underline 16b and the note mark 16c are recorded in the RAM region 11b. In Figs. 3(c) and 3(d), the reference numeral 16d represents note information which indicates a note to a predetermined word or phrase in a sentence, or a method of introducing a formula, etc. The note information is connected with the note mark 16c. For example, the note information connected with the first note mark 16c in Fig. 3(b) is a note to the phrase "RAM region", saying

"The RAM region is a rewritable region",
as shown in Fig. 3(c). The note information connected with the second note mark 16c in Fig. 3(b) is a note to the phrase "ROM region", saying
"The ROM region is a region exclusively for reproduction of the information recorded by forming pits (indentations)",
as shown in Fig. 3(d). On the display screen shown in Fig. 1, the fixed information 16a, the underline 16b, the note marks 16c and the note information 16d are displayed.

### Detailed explanation of information being recorded

Fig. 4 is a detailed explanatory view of the information being recorded in the partial ROM magneto-optical disk medium (private book) 11. The private book 11 is provided with the ROM region 11a in which the book (fixed information) such as a dictionary, a manual, a reference book and a dictionary of technical terms is recorded by stamping, as shown in Fig. 2, and the RAM region 11b in which additional information such as an underline and note information such as a note with respect to the fixed information is recorded.

The reference numeral 11₁₁ denotes a disk control information recording portion for recording the address (track address, sector address) of each portion of the ROM region 11a and the RAM region 11b, 11₁₂ denotes a ROM control information recording portion for storing the layout information of each item of page data which is recorded into the ROM region 11a, 11₁₃ denotes a publication control information storage portion for storing the name of the publisher, the name of the publication, the writer, the publication date, and the recorded position of each of a plurality of (e.g., two) publications which are stored in the private book 11, and the reference numeral 11₁₄ denotes a contents storage portion for storing the contents information of a first publication. The reference numeral 11₂₁ represents a first page data recording portion for storing the sentences and the pictures on the first page of a first publication, 11₂₂ a second page data recording portion for storing the sentences and the pictures on the second page of the first publication, ... 11_{2N} an N-th page data recording portion for storing the sentences and the pictures on the N-th page of the first publication, and 11₃ a storage portion for storing the contents and the sentences and the pictures on the whole pages of a second publication.

The reference numeral 11₄ denotes a RAM control information recording portion for storing the layout information of note data which are recorded in the RAM region 11b, 11₅₁ denotes a first page underline·note mark recording portion for storing the underlines and the note mark information on the first page of the first publication, 11₅₂ a second page underline·note mark recording portion for storing the underlines and the note mark information on the second page of the first publication, ... 11_{5N} an N-th page data recording portion for storing the underlines and the note mark information on the N-th page of the first publication, and 11₆ a storage portion for storing the underlines and the note mark information on the whole pages of the second publication.
The reference numeral 11₇ represents a note number control information recording portion for storing the correspondence between a note number and the position of a note mark or the like, 11₈₁ a first note data storage portion for storing the note information of a note number 1, 11₈₂ a second note data storage portion for storing the note information of a note number 2, and 11_{8M} an M-th note data storage portion for storing the note information of a note number M.

### Page layout· page data

Figs. 5(a) to 5(c) are explanatory views of page layout·page data, wherein Fig. 5(a) is an explanatory view of the layout of page data displayed on the display screen, Fig. 5(b) is an explanatory view of page layout information, and Fig. 5(c) explains the structure of page data. In Fig. 5(a), the reference numeral 15a represents a code information displaying area for displaying code information (sentence) in the page data, 15b a non-code information displaying area for displaying non-code information (picture) in the page data, and 15c an advertisement displaying area for displaying an advertisement.

If a sentences, a pictures and an advertisement for one page are displayed in the layout shown in Fig. 5(a), the layout information for each item of page data which is stored in the ROM control information recording portion 11₁₂ shown in Fig. 4 includes a page number, a display starting position (xs₁, ys₁) for indicating the position on the display screen for starting the sentence on the page, a display ending position (xe₁, ye₁) for indicating the position for ending the display of the sentence, a display starting position (xs₂, ys₂) for indicating position on the display screen for starting the picture such as a drawing on the page, a display ending position (xe₂, ye₂) for indicating the position for ending the display of the picture, a display starting position (xs₃, ys₃) for indicating the position on the display screen for starting an advertisement on the page, and a display ending position (xe₃, ye₃) for indicating the position for ending the display of an advertisement, as shown in Fig. 5(b). If there is no picture nor advertisement, the sentence is displayed on the whole screen, and when there is no sentence nor advertisement, the picture such as a drawing is displayed on the whole screen.

The page data recorded into the page data recording portions 11₂₁ to 11_{2N} is composed of page number data, code data, non-code data and advertisement data as shown in Fig. 5(c).

### Note layout· note data

Figs. 6(a) to 6(c) are explanatory views of note layout· note data, wherein Fig. 6(a) is an explanatory view of the layout of note data displayed in the window 15' of the display screen, Fig. 6(b) explains the structure of note layout information, and Fig. 6(c) shows the structure of note data.

In Fig. 6(a), the reference numeral 15' represents a window for displaying note information, 15a' a code information displaying area for displaying code information (sentence) in the note data, and 15b' a non-code information displaying area for displaying non-code information (picture) in the note data. The position and the size of the window 15' are variable on the basis of the amount of note data, but it is assumed to be constant in the following explanation for convenience' sake.

If the note data are displayed in the layout shown in Fig. 6(a), the layout information for each item of note data which is stored in the RAM control information recording portion 11₄ shown in Fig. 4 includes a note number, a display starting position (xs₁', ys₁') for indicating the position on the display screen for starting the sentence of the note, a display ending position (xe₁', ye₁') for indicating the position for ending the display, a display starting position (xs₂', ys₂') for indicating position for starting the picture in the note such as a drawing, and a display ending position (xe₂', ye₂') for indicating the position for ending the display, as shown in Fig. 6(b). The boundary line between the code information displaying area 15a' and the non-code information displaying area 15b' is designated when note information is input. Therefore, if there is no drawing, the sentence is displayed on the whole screen, and when there is no sentence, the picture such as a drawing is displayed on the whole screen.

Each item of the note data recorded into note data recording portions 11₈₁ to 11_{8M} is composed of a note number, code data and non-code data, as shown in Fig. 6(c). It is possible to input the code information (sentence) through a keyboard in the same way as in a word processor, and to input the non-code information (picture) by a mouse as if by manual writing.

### Note number control information

Fig. 7(a) is an explanatory view of a format of note number control information recorded in the note number control information recording portion 11₇ shown in Fig. 4.
(1) The position of the corresponding note mark (the number of the page on which the note mark exists and the number of characters counted from the first character on the page),
(2) the comment and title (if necessary) of the note data,
(3) presence or absence of an additional note mark which indicates the existence of another note, and (4) the note number if there is an additional note are written in correspondence with the note number.

In order to display the note data on the display screen, the note mark 16c ( note) or #) attached to the sentence which is displayed on the display screen 15 is indicated by the cursor CSR by operating the keyboard or the mouse, and thereafter the execution key is operated. By this operation, the note number n is obtained from the note number control information on the basis of the position of the note mark (page, number of characters counted from the first character). The layout information and the note data corresponding to the note number n are read out of the RAM control information recording portion 11₄ and the n-th note data recording portion 11_{8M}, respectively, and the note data are displayed in the window 15' on the basis of the layout information.

In order to display additional data on the display screen, in the state in which the note data are displayed in the window 15', as shown in Fig. 7(c), the note mark 16c' (note) or #) attached to the sentence in the note data is indicated by the cursor CSR by operating the keyboard or the mouse, and thereafter the execution key is operated. By this operation, the additional note number n' is obtained from the note number control information, the layout information and the note data corresponding to the note number n' are read, and the additional note data are displayed in the window 15'.

### Format of underline·note mark information

Fig. 8 is an explanatory view of the format of underline·note mark information. The underline·note mark information is provided for each page, and it is composed of a page number and code data. The code data are provided in correspondence with the whole characters and symbols on the corresponding page, and one item of code data is composed of, for example, 4 bits. The first bit of the code data is a control/non-control bit, the second bit is an underline/note mark discriminating bit, the third bit is a color bit indicating the color (black/red) being displayed and the fourth bit is a displaying form bit indicating the form of the underline or the note mark being displayed.

When there is no underline nor note mark to be attached to a character or a symbol, the first bit of the corresponding code data is set to "0" (non-control), and when an underline or a note mark is attached, the first bit is set to "1" (control). When a note mark is attached, the second bit is set to "0", while at the time of attaching an underline, the second bit is set to "1". When the underline or the note mark is displayed in a red color, the third bit is set to "0", while the third bit is set to "1" if it is displayed in a black color. When the underline is displayed in a wavy line and a note mark is displayed as note), the fourth bit is set to "0", and if the underline is displayed in a straight line and a note mark is displayed as #, the fourth bit is set to "1".

Therefore, in the case of displaying
" Partial Rom (HIKARI) (JI) (KI) (de) (i) (su) (ku) ..." (a capitalized word in a parentheses represents Japanese "kanji" and small one or two characters in a parentheses represent a Japanese "kana"),
as shown in Fig. 9(a), (an alphanumeric is displayed in 1 byte and each of "kana" and "kanji" is displayed in 2 bytes) and attaching a black straight underline to "Partial", a red wavy underline to "HIKARI JI KI" and a note mark note) to "de", as shown in Fig. 9(c), the code data shown in Fig. 9(b) is obtained as a code data in the underline·note mark information. In Fig. 9(b), the code data is represented by a decimal notation, so that 15 corresponds to "1111", 0 to "0000", 3 to "0011" and 5 to "0101" in a binary notation.

The underline information can be composed of position data (page, character position) indicating the starting and ending positions of the underline, form data and color data. The note mark information may also be composed of position data (page, character position) indicating the position of the note mark, form data and color data.

### (c) Embodiment of computer system

Fig. 10 shows the whole structure of an embodiment of a computer system using a partial ROM magneto-optical disk medium according to the present invention;

### Whole structure

In Fig. 10, the reference numeral 11 represents a partial ROM magneto-optical disk medium provided with a ROM region 11a exclusively for reading and a rewritable RAM region 11b. The reference numeral 12 represents a magneto-optical disk drive, 13a a keyboard, 13b a mouse, 14 the main body of the computer system, 15 a display unit and 17 a printer. In the display screen are provided a code information displaying area 15a for displaying code information (sentence) in page data, a non-code information displaying area 15b for displaying a picture such as a drawing in the page data, and an advertisement displaying area 15c for displaying an advertisement. A window 15' for displaying note data in accordance with the demand for display of the note data is provided at a predetermined position of the display screen in a multiwindow system. The sizes of the code information displaying area 15a, the non-code information displaying area 15b and the advertisement displaying area 15c are appropriately set in advance in the layout of each page. In the display screen, the reference numeral 16a denotes fixed information such as a book, 16b an underline, 16c a note mark and 16d note information such as a note.

Fixed information such as a book and address information are recorded by stamping and track guide grooves, etc. are also formed by stamping. In this way, the ROM region 11a is provided. Thereafter, the surface of the disk is coated with a magnetic film by sputtering in order to produce the RAM region 11b, and a protective film is formed thereon, thereby obtaining the partial ROM magneto-optical disk medium (private book) 11.

The computer body 14 reads the fixed information 16a on the designated page from the ROM region 11a of the private book 11 in accordance with the operation of the keyboard 13a or the mouse 13b, and displays the fixed information 16a on the display unit 15. The computer body 14 also creates, modifies or eliminates the underline 16b, the note mark 16c or the note information 16d with respect to the fixed information 16a by the operation of the keyboard 13a or the mouse 13b, and displays these pieces of information on the display unit 15 or records and stores them in the RAM region 11b of the private book 11.

### keyboard

Fig. 11 shows the structure of the keyboard 13a. The keyboard 13a is provided with the power key PK for turning on/off the power source, character input keys CK for inputting a character in the same way as in a wordprocessor, direction keys DK for moving the cursor in the direction indicated by an arrow, numeral keys TK, an execution key EK, various function keys FK, etc. In the function keys FK, F₁₁ represents a page key for designating the page of a private book, F₁₂ a precedent page key for displaying the page precedent to the current page F₁₂, F₁₃ a next page key for displaying the page next to the current page, F₂₁ an underline key which is operated in order to insert an underline, F₂₂ an underline form key for designating the form (straight line/wavy line) of an underline, F₂₃ a color key for designating the color of an underline or a note mark, F₃₁ a note mark key which is operated in order to insert a note mark, F₃₂ a mark form key for designating the form (#/note)) of a note mark, F₄₁ a delete key which is operated in order to delete an underline/note mark, F₅₁ a note key for commanding the creation of note data, F₅₂ a note display key which is operated in order to display predetermined note data, and F₅₃ an area key for designating the boundary line between the code information displaying area 15a' and the non-code information displaying area 15b' in the window 15' shown in Fig. 6.

When various function keys are provided on the key board 13a, as described above, the number of keys increases. If it is inconvenient, it is possible to provide a menu region in the above or below portion of the display screen, and to display various function keys in the region so as to indicate the desired function key by the cursor which is moved by the operation of a direction key or the mouse 13b.

### Structure of magneto-optical head

Fig. 12 shows the fundamental structure of a magneto-optical head used for a magneto-optical disk drive 12. In Fig. 12, the reference numeral 12₁ represents a semiconductor laser, 12₂ a collimation lens, 12₃ a roundness correction prism, 12₄ a reflecting mirror for transmitting the light from the semiconductor laser 12₁ and guiding the light reflected from the disk to a beam splitter 12₇ for reflecting the light toward the signal detection side, and 12₆ a two-dimensional actuator provided with an objective (not shown), a tracking coil and a focusing coil (not shown) for finely adjusting the objective in the directions of tracking and focusing, respectively, a data write coil (not shown), etc. The beam splitter 12₇ separates reflected light into the ROM data detection side and the RAM data detection side. The reference numeral 12₈ represents a half wavelength plate for rotating the polarization plane of incident light by 45 degrees so that the ratio of the quantity of light transmitted through a polarization beam splitter 12₁₀ at a latter stage and the quantity of light reflected thereby is 1 : 1. The reference numeral 12₉ denotes a converging lens, 12₁₁ an S-wave component detector, 12₁₃ a converging lens for converging the rays returned from the ROM region 11a, 12₁₄ a half mirror for transmitting and reflecting a part of returned rays, 12₁₅ a photodetector for tracking, 12₁₆ a cylindrical lens, and 12₁₇ a photodetector for focusing and signal detection.

### Principle of reading RAM information

The polarization beam splitter 12₁₀ transmits the light (P-wave component) which is parallel to the incident plane and reflects the light (S-wave component) which is vertical to the incident plane. It is therefore possible to detect the polarization state of incident light as a change in the quantity of transmitted light and the quantity of reflected light. The polarization plane of returned light is rotated by ϑₖ clockwise or counterclock wise due to the magnetic Kerr effect in accordance with the direction of magnetization (whether the information bit is "0" or "1") at the reading portion of the ROM region 11a, as shown in Fig. 13(a) and is rotated by 45 degrees by the half wavelength plate 12₈. Therefore, in the P-wave component (transmitted light) and the S-wave component (reflected light) output from the polarization beam splitter 12₁₀, when the information bit is "1", the P-wave component is larger than the S-wave component, and while when the information bit is "0", the P-wave component is smaller than the S-wave component, as shown in Fig. 13(b). Consequently, a signal PDS shown in Fig. 13(c) is output from the P-wave component detector 12₁₁, and a signal SDS shown in Fig. 13(c) is output from the S-wave component detector 12₁₂. By inputting these signals PDS, SDS into a differential amplifier, a reproduction signal (information reading signal) DTS of the same phase is obtained with noise removed therefrom.

### Principle of focus servo system

A cylindrical lens 12₁₆ actions as a lens only in one direction, and in the direction orthognal thereto the cylindrical lens 12₁₆ functions as a parallel plate without the action of a lens. Therefore, the cylindrical lens 12₁₆ has different focal lengths in directions, so that astigmatism is caused. With this nature of the cylindrical lens 12₁₆ taken into consideration, a four-piece photodiode (photodetector) 12₁₇ is disposed at the position where the beam section of the stigmatism optical system 12₁₇ is circular when the information recording surface of the disk 11 is on the focal plane of the objective OL, as shown in Fig. 14(a). By this arrangement, when the information recording surface approaches the objective OL, the beam section becomes vertically oblong, as shown in Fig. 14(b), when the information recording surface is on the focal plane of the objective OL, the beam section becomes circular, as shown in Fig. 14(b), and when the information recording surface is distant from the objective OL, the beam section becomes horizontally oblong, as shown in Fig. 14(c). Therefore, if the detection signals of the four-piece photodiode D₁ to D₄ are differentially amplified by the differential amplifier DFA, as shown in Fig. 14(c), a focus error signal FE shown in Fig. 14(e) is obtained. By driving a focus actuator so that the focus error signal FE is 0, the position of the objective OL in the direction of the magneto-optical disk 11 is adjusted.

If the detection signals of the diodes D₁ to D₄ of the four-piece photodiode are synthesized by a summing amplifier ADA, as shown in Fig. 14(c), a reproduction signal DTS' is obtained in correspondence with the presence or absence of a pit ("1" or "0" of the ROM information).

### Principle of tracking servo system

The magneto-optical disk 11 is provided with the track guide grooves TRG, as shown in Fig. 2(b), which enable tracking servo control. When the diameter of a laser beam is coincident with the track pitch, the track guide grooves TRG constitute a diffraction grating, so that a zero-order diffracted beam L₀ and ± primary diffracted beams L₁, L₁' are produced, as shown in Fig. 15(a). If the laser beam is situated at the center of a track (the center of adjacent track guide grooves TRG), the ± primary diffracted beams L₁, L₁' are produced symmetrically with respect to the center of the track. Therefore, when the photodetector 12₁₅ composed of two-piece diodes symmetrically with respect to the center of a track is provided and the output of each diode is differentially amplified by a differential amplifier DFA', a tracking error signal TE is produced as an output signal of 0 if the beam is on the track. On the other hand, if the beam deviates from the center of the track, the tracking error signal TE is output in the form of a wave which corresponds to the deviation, as shown in Fig. 15(b). By driving a tracking actuator so that the tracking error signal TE is 0, the position of the objective OL in the radial direction of the magneto-optical disk 11 is adjusted.

### Magneto-optical disk drive

Fig. 16 shows the structure of the magneto-optical disk drive 12. In Fig. 16, the reference numeral 12a represents the magneto-optical disk shown in Fig. 12, 12₁ a semiconductor laser, 12₁₁ a P-wave component detector, 12₁₂ an S-wave component detector, 12₁₅ a photodetector for tracking, 12₁₇ a photodetector for focusing and signal detection, and the symbol OL represents an objective. The reference numeral 12b denotes a control unit composed of a microcomputer which controls the magneto-optical disk drive as a whole including the positioning of the magneto-optical head and the reading and recording of data in accordance with the command from the main body 14 (see Fig. 10) of the system. The reference numeral 12c represents a head access controller for positioning the magneto-optical disk 12a to a predetermined position in accordance with the command of the control unit 12b, 12d a ROM data reproducing circuit for reproducing the data recorded in the ROM region 11a, 12e a RAM data reproducing circuit for reproducing the data recorded in the RAM region 11b, 12f a RAM data recording circuit for recording data in the RAM region 12f, and 12g a servo circuit for controlling the tracking and focusing operations by using a servo system.

When the control unit 12b receives a data read command from a host apparatus (computer body 14), the control unit 12b commands the head access controller 12c to position the magneto-optical head 12a at the designated address so that the magneto-optical head 12h reads the signal recorded in the ROM region 11a or the RAM region 11b. The magneto-optical head 12a inputs the signal read out of the ROM region 11a or the RAM region 11b to the ROM data reproducing circuit 12d or the RAM data reproducing circuit 12e, and the reproducing circuit 12d or 12e reproduces data from the signal input from the detector(s) and inputs the reproduced data to the control unit 12b. The control unit 12b inputs the data to the computer body 14. When the control unit 12b receives a data write command from the computer body 14, the control unit 12b commands the head access controller 12c to position the magneto-optical head 12a at the designated address and turns on/off the semiconductor laser 12₁ so as to write the data in the RAM region 11b.

### Structure of the main body of the system

Fig. 17 shows the whole structure of the computer body in the embodiment. In Fig. 17, the reference numeral 11 represents a private book (partial ROM magneto-optical disk medium), 12 a magneto-optical disk drive, 13 an inputting portion such as a keyboard and a mouse, 14 a computer body, 15 a display unit and 17 a printer.

In the computer body 14, the reference numeral 14a denotes a processor (CPU) for controlling each device and memory which is connected to the bus in accordance with a control program and control data, 14b a memory having a control program storage region 14b-1 and a control data storage region 14b-2. The control data are data necessary for controlling the operations of reading and writing the private book 11 such as disk control information, ROM and RAM control information, publication control information and note number control information which are recorded in the private book 11. The reference numeral 14c represents a page memory for storing data such as initial screen data, publication control information and page information, as occasion demands, 14d a page underline memory for storing underline and note mark information with respect to the page data which are stored in the page memory 14c, and 14e a display edition circuit for producing a dot pattern image for one screen which is displayed on the display unit 15. The display edition circuit 14e converts the code data in the page memory 14c and the page underline memory 14d into dot patterns, and synthesizes the dot patterns with the non-code data stored in the page memory, thereby producing a dot pattern image for one screen.

The reference numeral 14f denotes a page display memory for storing a dot pattern image for one screen, and 14g a ROM for storing the initial screen data which is to be displayed after the power source is turned on. For example, the data for displaying the picture shown in Fig. 18 are stored in the ROM 14g. A memory 14h stores note number control information and a note memory 14i stores note information. A display edition circuit 14j produces a dot pattern image on the basis of note information, and a window display memory 14k stores the dot pattern image produced on the basis of note information. The reference numeral 14m represents a window controller for displaying the image stored in the window display memory 14k on the image stored in the page display memory 14f, 14n a printer controller for printing the hard copy of the images stored in the page display memory 14f and the window display memory 14k, 14p a cursor position monitor for monitoring the position of the cursor, and 14q a cursor image producer for producing the image of the cursor at the position of the cursor.

The operations of the computer body 14 under control of the corresponding controllers will now be explained.

### Display of initial screen and publication

Fig. 19 is an explanatory view of the operation of displaying the initial screen and a publication when the power source is turned on. The numerals in circles in Fig. 19 represent the sequence of processings which will be explained hereinunder.
(1) When the power source is turned on by the power key PK of the key board 13a (see Fig. 11), (2) the processor 14a reads the initial screen data stored in the ROM 14g on the basis of the control program and inputs the data into the page memory 14c. Then the display edition circuit 14e converts the character codes into the dot pattern, stores the dot pattern in the page display memory 14f and displays the initial screen such as, for example, that shown in Fig. 18 on the display screen.
(3) Thereafter, if the user sets the private book 11 in the magneto-optical disk drive 12, the processor 14a commands the magneto-optical disk drive 12 to read disk control information, ROM control information and RAM control information under the control of the control program.
(4) When the command is issued, the magneto-optical disk drive 12 positions the magneto-optical head at a predetermined address, successively reads the disk control information, the ROM control information and the RAM control information. The processor 14a receives these items of data and stores them in the control data storage region 14b-2 as the control data.
(5) The processor 14a commands the magneto-optical disk drive 12 to read publication control information under the control of the control program. Since the disk control information contains the address of the recorded position of the publication control information, the processor 14a reads the address of the recorded position before commanding the magneto-optical disk drive 12.

In accordance with this command, the magneto-optical disk drive 12 positions the magneto-optical head at a predetermined address, and the processor 14a fetches the publication control information and stores it in the page memory 14c. Thereafter the display edition circuit 14e converts the character codes into a dot pattern, stores it in the page display memory 14f, and displays the list of the names of all the publications recorded in the private book 11, the names of the writers thereof, the publication dates, the names of the publishers are displayed.

### Selection of publication and display of contents

Fig. 20 is an explanatory view of the operation of selecting a publication and displaying the contents.
(1) While the list of the publications are displayed on the display screen, the publication being utilized is selected by moving the cursor or inputting the number of the publication.
(2) When the publication is selected, the processor 14a fetches the address of the recorded position of the publication, the total capacity, etc. from the control data storage region 14b-2, and commands the magneto-optical disk drive 12 to read the contents information of the selected publication with reference to the data.
(3) In accordance with the command, the magneto-optical disk drive 12 positions the magneto-optical head at the address where the contents information is recorded and reads the contents information. The processor 14a stores the contents information in the page memory 14c. The display edition circuit 14e converts the character codes stored in the page memory 14c into a dot pattern, stores it in the page display memory 14f, and displays the contents on the display unit 15.

### Selection of page and display of page information

Fig. 21 is an explanatory view of the operation of selecting a page and displaying page information (sentence, picture) in the state in which the contents are displayed.
(1) While the contents are displayed on the display screen, a page number is input through the keyboard. For example, after the page key F₁₁ is pressed down, a page number is input.
(2) When the page number is input. the processor 14a judges whether or not the page data of designated page are stored in the page memory 14c under the control of the control program. If the data are stored, they are displayed on the display screen as they are. On the other hand, if the data are not stored, the processor 14a commands the magneto-optical disk drive 12 to read the page data and the underline·note mark information of the page. Since, as to the page data and the underline·note mark information, correlation of the page number and the address of the recorded position is included in the disk control information, the processor 14a obtains the address of the recorded position from the correlation before commanding the magneto-optical disk drive 12.
(3) In accordance with the command, the magneto-optical disk drive 12 positions the magneto-optical head at the designated address, and reads the page data and the underline·note mark information of the designated page. The processor 14a fetches the page data and the underline·note mark information and stores them in the page memory 14c and the page underline memory 14d, respectively. The display edition circuit 14e converts the code data in the page memory 14c and the page underlined memory 14d into bit patterns, and synthesizes these bit patterns with the non-code data in the page memory 14c so as to produce a bit pattern image for one screen which is displayed on the display unit 15. In this way, the page data (sentence, picture, advertisement) and the underline·note mark of the designated page are displayed. The display edition circuit 14e generates the bit pattern image for one screen with reference to the page layout information.
(4) The processor 14a then commands the magneto-optical disk drive 12 to read the note number control information (see Fig. 7) in accordance with the control program. Since the address of the recorded position of the note control information is included in the disk control information, the processor 14a obtains the address of the recorded position before commanding the magneto-optical disk drive 12. In accordance with this command, the magneto-optical disk drive 12 positions the magneto-optical head at the designated address and reads the note number control information, and the processor 14a stores the note number control information in the note number control information memory 14h.

### Insertion and display of underline.note mark

Fig. 22 is an explanatory view of the operation of writing an underline, inserting a note mark and displaying the underline and the note mark.
(1) In order to insert an underline while the page data (sentence, picture, advertisement) of the designated page are displayed on the display screen, the first character of the passage being underlined is indicated by the cursor, and the underline key F₂₁ is pressed down. Thereafter, the last character of the passage being underlined is indicated in the same way by the cursor, and the underline key F₂₁ is pressed down. The form and the color of the underline are then selected by the keys F₂₂ and F₂₃, and the execution key EK is pressed down.
(2) When the underline insertion command is input in the above-described way, the processor 14a creates code data of 4 bits in correspondence with the whole characters being underlined from the first to the last in accordance with the control program (see Fig. 8), and the code data stored in the page underline memory 14d are replaced by the created code data. The display edition circuit 14e converts the code data in the page memory 14c and the page underline memory 14d into bit patterns, and synthesizes these bit patterns with the non-code data in the page memory 14c so as to produce a bit pattern image for one screen which is displayed on the display unit 15. In this way, the page data (sentence, picture, advertisement) and the underline of the designated page are displayed.

In order to delete the underline, after indicating the first character and the last character of the passage from which the underline is to be deleted by the cursor, the delete key F₄₁ is pressed down. The processor 14a creates code data of 4 bits beginning by "0" in correspondence with the whole characters, and the code data stored in the page underline memory 14d are replaced by the created code data. In this way, the underline is deleted from the designated portion.

While the insertion and deletion of the underline was described, the insertion and deletion of a note mark is also performed in the same way with that of the underline.
(1) In order to insert a note mark while the page data (sentence, picture, advertisement) of the designated page are displayed on the display screen, a character to which the note mark is attached is indicated by the cursor, and the note mark key F₃₁ is pressed down. Thereafter, the form and the color of the note mark are then selected by the keys F₂₂ and F₂₃, and the execution key EK is pressed down.
(2) When the note mark insertion command is input in the above-described way, the processor 14a creates code data of 4 bits in correspondence with the character being attached the note make in accordance with the control program (see Fig. 8), and the code data stored in the page underline memory 14d is replaced by the created code data. The display edition circuit 14e converts the code data in the page memory 14c and the page underline memory 14d into bit patterns, and synthesizes these bit patterns with the non-code data in the page memory 14c so as to produce a bit pattern image for one screen which is displayed on the display unit 15. In this way, the page data (sentence, picture, advertisement) and the note mark of the designated page are displayd.

In order to delete the note make, after indicating the character from which the note mark is to be deleted by the cursor, the delete key F₄₁ is pressed down. The processor 14a creates code data of 4 bits beginning by "0" in correspondence with the characters, and the code data stored in the page underline memory 14d is replaced by the created code data. In this way, the note mark is deleted from the designated portion.

### Selection and display of note

Fig. 23 is an explanatory view of the operation of selecting and displaying note information.
(1) In order to display the note information corresponding to the note mark while the page data (sentence, picture, etc.) and the underline·note mark of the designated page are displayed on the display screen, after the note mark is indicated by the cursor, the note display key F₅₂ is pressed down.
(2) By this operation, the position of the character at which the note mark is attached and the note display command are fetched by the processor 14a. The processor 14a obtains the note number from the note number control information (see Fig. 7) which is stored in the memory 14h on the basis of the page number of the designated note mark and the position of the character at which the note mark is attached.
(3) Since the correlation of the note number and the address of the recorded position of note information is included in the disk control information, the processor 14a obtains the address of the recorded position of the note information corresponding to the note number from the correlation, and commands the magneto-optical disk drive 12 to read the note information.
(4) In accordance with the command, the magneto-optical disk drive 12 positions the magneto-optical head at the designated address, and reads the designated note information. The processor 14a stores the note information in the note memory 14i. The display edition circuit 14e converts the code data in the note memory 14i into a bit pattern, synthesizes this bit pattern with the non-code data in the note memory 14i, and stores it in the window display memory 14k. The display edition circuit 14j creates a bit pattern image for one screen with reference to the note layout information.
(5) Thereafter, the processor 14a commands the window controller 14m to display the image in the window. In accordance with the command, the window controller 14m displays the image from the window display memory 14k on the picture from the page display memory 14f (see Fig. 7(b)).

### Input of note information

Fig. 24 is an explanatory view of the operation of inputting note information.
(1) In order to input new note information while the page data (sentence, picture, etc.) and the underline·note mark of the designated page are displayed on the display screen, a note mark is first inserted and displayed in the same way as described above.
(2) In this state, the note key F₅₁ on the keyboard is pressed down so as to issue a note information input command.
(3) When the processor 14a receives the note information input command, the processor 14a adds a new note number m to the note number control information which is stored in the memory 14h and then adds the position of the note mark inserted in the processing (1) in correspondence with the note number m. The processor 14a also clears and holds the contents of the note memory 14i, and also commands the window controller 14m to display the image in the window. In accordance with the command, the window controller 14m displays the image from the window display memory 14k (only the window frame is first displayed) on the picture from the page display memory 14f (see Fig. 7(b)).
(4) After the area designating key F₅₃ is pressed down, the boundary line between the code information displaying area 15a' and the non-code information displaying area 15b' is indicated by the cursor. The processor 14a displays the boundary line and adds the layout information for the note number m to the RAM control data which are stored in the control data storage region 14b-2.

When the note information is input through the keyboard in the same way as in a word processor or by a mouse as if by manual writing, the processor 14a serially stores the note information in the note memory 14i. The display edition circuit 14j converts the code data in the note memory 14i into a bit pattern, synthesizes this bit pattern with the non-code data in the note memory 14i, and stores it in the window display memory 14k. The window controller 14m displays the image (note information) from the window display memory 14k on the image from the page display memory 14f.

### Going to the precedent or next page and writing information into magneto-optical disk

Fig.25 is an explanatory view of the operation of going to the precedent or next page and writing information into a magneto- optical disk.
(1) A go-to page command is issued by pressing down the precedent page key F₁₂ or the next page key F₁₃.
(2) In accordance with the go-to page command, the processor 14a commands the magneto-optical disk drive 12 to write underline· note mark information, note number control information, note information, RAM control information or the like only when there is any addition or modification. Since ① as to the underline·note make information, the correlation with the page number and the address of the recorded position is included in the disk control information, ② as to the note number control information and the RAM control information, the address of the recorded position is included in the disk control information, and ③ as to the note information, the correlation with the note number and the address of the recorded position is included in the disk control information, the processor 14a obtains the address of the recorded position of the corresponding information before commanding the magneto-optical disk drive 12. In accordance with the command, the magneto-optical disk drive 12 positions the magneto-optical head at the designated address, and writes the designated information in the RAM region 11b.
(3) When writing of the information is ended, the processor 14a commands the magneto-optical disk drive 12 to read the page data and the underline·mark note information of the page precedent or next to the current page.
(4) By the same processing as the processing (3) in the process of Selection and display of page, the page data and the underline·note mark information are displayed on the display screen.

The processing (2) is also executed in the case of displaying a picture different from the current picture by the operation such as turn-off of the power or due to the command for displaying a different publication.

### (d) Another embodiment of computer system

The computer system (c) is provided with a partial ROM magneto-optical disk medium having a ROM region and a RAM region and stores underlines, note marks and note information in the RAM region. In another embodiment of a computer system according to the present invention, a CD-ROM and a floppy or an IC memory are provided in place of the partial ROM magneto-optical disk medium; book information is recorded in the CD-ROM as the ROM region by forming pits by stamping; and underlines, note marks and note information are written in the floppy or the IC memory as the RAM region.

Fig. 26 shows the structure of such a computer system. In Fig. 26, the same reference numerals are provided for the elements which are the same as those in the computer system shown in Fig. 17. The computer system shown in Fig. 26 is different from that shown in Fig. 17 in (1) that a CD-ROM 11', a floppy 18 and a floppy disk drive 19 are provided in place of the partial ROM magneto-optical disk medium, and (2) that book information is recorded in the CD-ROM 11' as the ROM region by forming pits, while underlines, note marks and note information are written in the floppy 18 as the RAM region.

As the display unit 15, CRT, liquid crystal display, plasma display, etc. are usable, but adoption of a spectacle display can reduce the size of the computer system and make it handy to carry. If a sensor for detecting the movement of a finger is used in place of the keyboard or the mouse so as to restrict the inputting operation to the minimum necessary such as the operation for selecting a page or going to the precedent or next page, further reduction in the size is enabled.

As described above, according to the present invention, since it is possible to freely write additional information such as an underline or a note with respect to fixed information such as a book and to display the written additional information simultaneously with the fixed information, the user can utilize the electronized publication as if it were a book composed of printed pages, whereby the convenience of the electronized publication is enhanced.

According to the present invention, the ROM region provided by recording fixed information such as a book into a disk with pits by stamping and the rewritable RAM region formed by coating at least the remaining portion of the disk with a magnetic film constitute the partial ROM magneto-optical disk medium, and modifying information such as an underline and note information such as a note with respect to the fixed information are stored in the RAM region 11b. By recording the fixed information by stamping, the process for electrically writing each fixed information is obviated, thereby facilitating the production of an electronized publication and that in a short time and at a low cost.

In addition, according to the present invention, since it is possible to freely write private information such as an underline, a note mark and note information with respect to the fixed information, it is possible to control both fixed information and private information by one partial ROM magneto-optical disk medium.

Furthermore, it is possible to use the partial ROM magneto-optical disk medium as the recording medium in the computer system so as to read the fixed information from the partial ROM magneto-optical disk medium by the operation of the operating portion of the computer body and display the fixed information on the display unit. It is also possible to create an underline, a note mark and a note information with respect to the fixed information, display such information on the display unit and record such information into the RAM region of the partial ROM magneto-optical disk medium. In this way, since it is possible for the user to freely write private information such as an underline and note information and display the written information simultaneously with fixed information, the user can utilize the electronized publication as if it were a book composed of printed pages, whereby the convenience of the electronized publication is enhanced.

In addition, it is possible to freely create, modify or delete private information such as an underline and note information and display the private information simultaneously with a book by recording fixed information into a CD-ROM or the like and storing private information into a floppy disk, an IC memory or the like, whereby the convenience of the electronized publication is enhanced.

As many apparently widely different embodiments of the present invention can be made without departing from the spirit and scope thereof, it is to be understood that the invention is not limited to the specific embodiments thereof except as defined in the appended claims.

## Claims

1. A partial ROM magneto-optical disk medium comprising:
a ROM region exclusively for reading into which fixed information is recorded by stamping; and
a rewritable RAM region for storing at least additional information such as an underline and a note with respect to said fixed information.

2. A partial ROM magneto-optical disk medium according to Claim 1, wherein said fixed information is a book such as a dictionary, a manual, a reference book and a dictionary of technical terms.

3. A partial ROM magneto-optical disk medium according to Claim 1, wherein said additional information is modifying information such as an underline and has data which indicates the position of said fixed information at which said fixed information is modified.

4. A partial ROM magneto-optical disk medium according to Claim 1, wherein said additional information is note information such as a note for the word or the phrase in said fixed information to which a note mark is added and has data which indicates the position of the note mark.

5. A computer system comprising:
a partial ROM magneto-optical disk apparatus using as a storage medium a partial ROM magneto-optical disk medium provided with ROM region for storing fixed information and a readable/rewritable RAM region for storing additional information such as an underline and a note with respect to said fixed information;
a display unit for displaying said fixed information and said additional information such as an underline and a note ;
an operating portion which is operated so as to create said additional information such as an underline and a note and to display said additional information; and
a control unit for creating said additional information such as an underline and a note and displaying said additional information on the basis of the operation of said operating portion.

6. A computer system according to Claim 5, wherein said fixed information is a book such as a dictionary, a manual, a reference book and a dictionary of technical terms, said oparating portion is operated to input position data of underline in the book, position data of note mark for specifying a word or phrase in the book and a note to the word or phrase specified by said note mark, and said control unit displays, together with said fixed information, the underline, the note mark and the note on the display unit.

7. A computer system according to Claim 6, wherein the control unit controls for storing said position data of said underline and said position data of said note mark for each page of said book in said RAM region and further storing the correspondence between said position of said note mark and said note in said RAM region.

8. A computer system comprising:
an optical disk apparatus using a disk for optically storing fixed information as a storage medium;
a rewritable storage unit for storing additional information such as an underline and a note with respect to said fixed information;
an operating portion which is operated so as to create and display said additional information such as an underline and a note;
and a control unit for creating said additional information such as an underline and a note on the basis of the operation of said operating portion and displaying said additional information on said display unit.
